# EUROPEAN PATENT SPECIFICATION

(11) **EP 3 719 646 B1**
(45) Date of publication and mention of the grant of the patent: **15.11.2023**
(21) Application number: 20166456.2
(22) Date of filing: 27.03.2020
(51) Int. Cl.: H04L 67/12

(54) **METHOD FOR COMMUNICATING IN A NETWORK-DISTRIBUTED PROCESS CONTROL SYSTEM AND NETWORK-DISTRIBUTED PROCESS CONTROL SYSTEM**
VERFAHREN ZUR KOMMUNIKATION IN EINEM NETZWERKVERTEILTEN PROZESSSTEUERUNGSSYSTEM UND NETZWERKVERTEILTES PROZESSSTEUERUNGSSYSTEM
PROCÉDÉ DE COMMUNICATION DANS UN SYSTÈME DE COMMANDE DE PROCÉDÉ DISTRIBUÉ PAR RÉSEAU ET SYSTÈME DE COMMANDE DE PROCÉDÉ DISTRIBUÉ PAR RÉSEAU

(30) Priority: 02.04.2019 HU 1900106; 06.02.2020 HU 2000043
(43) Date of publication of application: 07.10.2020
(73) Proprietor: Gamma-Digital Kft., 1029 Budapest (HU)
(72) Inventor: Szoke, Máté, 1142 Budapest (HU)
(74) Representative: Kereszty, Marcell

(56) References cited:
- WO-A1-2017/149050
- US-A1- 2018 321 662

## Description

### TECHNICAL FIELD

The invention relates to a method for communicating between operative nodes constituting a network of a network-distributed process control system comprising a PLC (Programmable Logic Controller), and to a network-distributed process control system.

### BACKGROUND ART

Industrial process control systems, for example SCADA (Supervisory Control And Data Acquisition) systems are nowadays often operated over distributed networks, and the software programs are running on local computers and/or on cloud-based virtual machines. Therefore, the security and also the expandability and scalability of the system, as well as the implementation of communication between the network nodes play a key role with regard to the reliable operation of the system.

According to the state of the art several technical solutions are known for providing communication between network nodes.

In US 2018/0026942 A1 a communication protocol of an industrial process control system utilizing a publisher-subscriber pattern is disclosed. The system comprises a so-called broker connected to a data acquisition unit that is adapted for querying and organizing data, and these organized data are being allowed to be queried from the broker depending on the applicable permissions. According to the document, the data are transferred to clients, typically for visualization purposes. A disadvantage of the publisher-subscriber model is that it only provides a unidirectional communication (directed from the publisher to the subscriber) between the nodes, so this model cannot fulfil the need, arising often in process control systems, for sending commands in a direction opposite to the direction of data transmission.

In US 2011/0153969 A1, a method for providing a secure, one-way communication path is disclosed. The entities in the network are classified in various security levels by the system. Communication between the security levels can be restricted, and even a one-way data flow can be prescribed between certain levels. Like in the previous case, the disadvantage of this technical solution is the one-sidedness of communication that does not allow sending commands in a reverse direction.

In US 2017/0201582 A1, a solution related to an information management of a cloud-based distributed network is disclosed. The system comprises a data delivery sub-unit that automatically delivers information to the network nodes and to a data update sub-unit. Sending commands in the reverse direction is not implemented in this technical solution, either.

A number of different technical solutions related to the cybersecurity of process control systems are known in the state of the art.

In US 2011/0039237 A1, a method and system for managing the cybersecurity of SCADA systems are disclosed. A centralized system security manager (SSM) unit is integrated into a SCADA system for collecting and managing security-related data. The SSM is capable of setting the security level of the collected data even in an automated manner, and data access can be controlled separately for each security level, for example that lower levels cannot access higher-level data. The SCADA system can be isolated from external connection and access.

US 2017/0192414 A1 is related to the management of industrial systems. Due to their widespread application, the security and cybersecurity of industrial loT (Internet of Things) systems is a priority issue. According to the document, the industrial loT devices can push the data and processed data to a computing cloud, and the industrial loT devices can also be configured to provide a secure bidirectional connection between the industrial loT-cloud and the industrial machines.

US 2018/0139104 A1 also discloses a method and system for managing the cybersecurity of SCADA systems. The document contains examples for the structure of SCADA networks constituted by multiple separate portions and for the interconnections between the portions; however, the control network is not isolated for example from the HMIs (Human Machine Interfaces) adapted for displaying data, so the removable devices connected to the system by the users may introduce malicious software in the system, which leads to an increased risk for the operation of the system. The method comprises the discovery and mapping of the network containing Layer 2 (data link layer) and Layer 3 (network layer) according to the OSI model for describing computer networks, and also the discovery of the subnets in Layers 2 and 3, including the detection of the active and "silent" devices connected to the subnets. The method is adapted for analyzing data traffic between the entities in the network, and provides for maintaining bidirectional data traffic between the entities.

In US 10,033,762 B2, the security of a network is ensured by applying a deception centre. The deception centre can be connected to a network with an arbitrary structure, wherein certain portions of the network may be implemented in a computing cloud. The document also discloses a possible structure of a SCADA system, and discusses the problems inherent in the interconnection of a corporate network and a field or an industrial network.

US 2018/0284758 A1 discloses a data acquisition and monitoring system applied in an industrial environment. Protection against cyberattacks is implemented by applying a mobile ad-hoc network ("MANET") that is adapted for establishing a secure temporary connection to a computing cloud or to another remote network.

The common disadvantage of the technical solutions related to cybersecurity is that they comprise additional devices or networks, which, on the one hand, makes the structure of the system more complex, and, on the other hand, increases the costs of implementing and maintaining the network.

Process control networks consisting of various different layers adapted for performing different network roles are known in the state of the art.

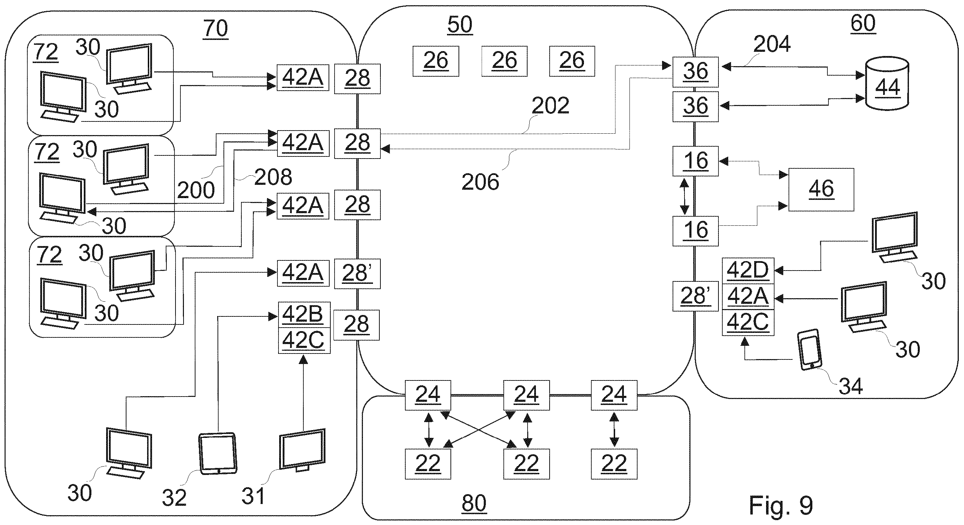

In US 10,031,500 B1, an industrial supervisory and control system consisting of multiple layers is disclosed. Certain layers of the system are depicted in Fig. 9A of the document that also indicates the recommended computing methods corresponding to each layer. In the lower layers, ground or liquid computing is to be applied, while at the higher levels of the system, cloud, fog or edge computing can be applied. The system contains a data acquisition and data processing unit and a buffering unit that is adapted for storing the measured data until the data can be uploaded to the data processing unit over the network. The system has the disadvantage that the buffering units are not prepared or configured for providing sufficiently high availability, which may result in the loss of stored data, and the access to critical data is also not restricted sufficiently, which may completely disrupt the operation of the system.

In US 9,143,563 B2, a distributed and scalable data historian framework is disclosed. By applying the framework, data can also be managed effectively in multilayer architectures. The system comprises a cloud interface adapted for transferring data to a computing cloud.

Process control systems are disclosed in US 7,650,607 B2 and US 7,086,009 B2. The system according to US 7,650,607 B2 has multiple layers, wherein certain components of the upper layers are adapted to be stored in the lower layers. US 7,086,009 B2 discloses a customizable process control system wherein new objects can be designed, and further objects can be derived from the designed objects. The systems described in both documents contain connections to PLCs, and the systems also comprise data acquisition units, but neither of the documents contains disclosure relating to a specific environment for implementing the computations related to the data processing steps and for implementing data storage.

The state of the art also contains the technical solutions summarized below:
In the 2017 paper by the authors M. Sági and E. Varga entitled "Dependable Peer-to-Peer SCADA Architecture" (Acta Polytechnica Hungarica, Vol. 14, No. 6, 2017, pp. 231-243), an implementation of a SCADA system based on a distributed data storage system is suggested, wherein the bandwidth to performance ratio can be adjusted, and the communication between the SCADA nodes can be optimized. The proposed system comprises equivalent SCADA nodes between which bidirectional communication can be provided, the SCADA nodes share data with the "interested" nodes. The exact technical details of the implementation of the communication, for example the selection of "interested" nodes, are not described in the paper, so the paper does not disclose a tag communication between two nodes wherein one node behaves as a source node and the other node behaves as a sink node in relation to a given tag.

Furthermore, a dynamically operated system is also described in the paper wherein reading out data (for example, tag data) from a field equipment, for example, from RTUs (Remote Terminal Units), is not explicitly bound to a dedicated node, but is dynamically modified according to the actual load of the nodes. The load values are determined based on the number of expected changes per second, but the paper contains no teaching on actually determining the values. This solution has the disadvantage that, if the value characteristic of the loads is specified as a fixed value, then a separate method has to be devised for maintaining this fixed value, otherwise the loads can change unexpectedly, which can lead to a faulty operation of the system. Such a method is not disclosed in the article. If the value characteristic of the loads is not a fixed value, then a method for dynamically changing the load on the nodes also has to be provided that also ensures that transient states are prevented and handles the rerouting problems arising from load changes; however, such a method is not disclosed in the paper.

In section 4 of the paper, the possibility of adding further field devices to the network is mentioned. In process control systems, the field devices are typically RTUs or PLCs, but these types of device are not suited for functioning as process control network nodes adapted for performing operational functions, so the document does not address the problem of adding a new network node to the network, and the problem of the communication required between the nodes for maintaining the secure operation of the system in this case.

Furthermore, in the technical solution according to the paper, data processing and communication are inseparable operations (see lines 2-3 of the last paragraph in page 236), so they cannot be implemented in separate nodes or in separate network layers.

In section 2 of the paper, configuration propagation is based on a distributed version control system. However, the paper does not address what happens in the event of a conflict, for example, when two contradictory commands are received at the same time. The risk of conflict is increased further by allowing, as described in the paper, the editing of configuration from any node provided the node has the sufficient permissions. Therefore, for providing configuration propagation, a method has to be provided that either prevents conflicts from occurring, or handles the conflicts satisfactorily. However, the paper does not disclose such a method.

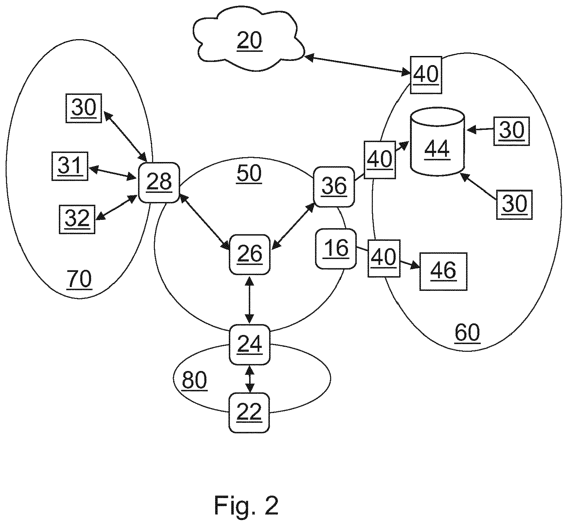

In the document entitled "Communication network dependencies for ICS/SCADA Systems" published by ENISA (the European Union Agency for Cybersecurity, formerly: European Network and Information Security Agency), the security and cybersecurity of primarily SCADA networks is addressed. In Fig. 2 of the document, a SCADA system implemented according to the ISA95 standard is illustrated, wherein the network nodes can be classified into layers (in the example according to the figure, 4 layers) according to their network roles. In the system according to the figure, the data display (HMI) and process control (SCADA) tasks are assigned to the same layer, Layer 2 of the ISA95 standard, so they cannot be scaled or expanded independently by adding new network nodes. In addition to that, the components in each layer do not belong to the same subnet but to different subnets, by way of example to subnets adapted to perform different functions, so the network layers cannot be expanded simply by adding a new network node but only by adding another subnet that comprises several network nodes belonging to different network layers. A system wherein the network layers themselves could be expanded by adding further network nodes is therefore not disclosed in the document. The document does not disclose a method wherein source and sink nodes are assigned to tag data of PLCs in the course of a communication between network nodes, and the tag data are transferred from the source node to the sink node.

A figure illustrating a schematic structure of a SCADA system adapted for controlling the power supply of an urban underground system can be retrieved from the website of LOT Group (https://lotaroup.eu/product/rail-transport/scada/). The schematic figure does not disclose the detailed configurations, roles and tasks of the particular network nodes. According to the figure, the nodes are organized hierarchically by substations, i.e. the nodes are grouped according to the substations instead of grouping them in separate subnets according to their roles and functions. The website does not disclose a system wherein the network layers are implemented according to network roles, i.e. in particular, a data acquisition layer, a data processing layer, a presentation layer or an archiving layer is not disclosed on the website. In the schematic figure that can be found on the website there is not disclosed the exact function of the particular nodes, so a system comprising two data acquisition nodes operating in master mode according to an identical node configuration is also not disclosed on the website. Furthermore, the website also does not disclose the method of communication between the network nodes.

The above described shortcomings are present when the ENISA publication, the website of the LOT Group, and the paper by M. Sági and E. Varga are considered in themselves, respectively, so these documents do not disclose, even in combination, a communication method between the nodes of a process control network, wherein source and sink nodes are defined in relation to particular tag data of the PLCs, and the tag data is transferred from the source node to the sink node corresponding to the given tag data. A system comprising a network layer allowing the addition of (a) further network node(s) without there being a need to add additional nodes in order to maintain the operation of the network is also not disclosed.

US 2018/0321662 A1 discloses an open architecture industrial control system using an actor model to perform communications within the system. The system uses a unidirectional flow with respect to data messaging, and according to paragraph 69 of the description, calling backwards should be avoided.

### DESCRIPTION OF THE INVENTION

In light of the known technical solutions, there is a need for a method for communicating in a network-distributed process control system comprising PLCs that is adapted for providing a secure, reliable connection between the network nodes performing different network roles. There is also a need for a network-distributed process control system that is divided into layers, and, through controlling communication between the nodes in different network layers, is capable of reliable operation and is protected against cyber-attacks without utilizing dedicated security units.

The object of the technical solution according to the invention is to provide a communication method and process control system that eliminate the drawbacks of prior art solutions to the greatest possible extent.

The primary object of the invention is to provide a communication method that is adapted for providing secure, reliable connection between the network nodes of a network distributed process control system comprising PLCs.

A further object of the invention is to provide a communication method that also allows for the realization of a bidirectional connection between network nodes, wherein, for the sake of the security of the system, a preferred direction of data flow is determined by a configuration of the nodes.

A further object of the invention is to provide a process control system wherein the network nodes are arranged in different network layers corresponding to their functions and network roles, while the security of the system is ensured and its protection against cyber-attacks is provided by controlling the communication between the network nodes located in different network layers.

The objects according to the invention have been achieved by the method according claim 1 and by the system according to claim 8. Preferred embodiments of the invention are defined in the dependent claims.

In process control systems, tag data are usually read out from PLCs by polling. The advantage of the communication method according to the invention is that - contrary to customary technical solutions - the tag data of the PLCs are made accessible in the network not by polling the data through a service, but by transferring the data to network nodes situated at the boundaries between the networks of the process control system, which nodes forward the data, in a suitable format, to other network nodes in the network, or to external networks, and thus the access to the process control network can even be completely blocked for external networks, while the entire functionality of the process control system is maintained. Blocking external access to the network improves the security of the system, while at the same time the system can access (can query) all the necessary data.

The so-called source nodes assigned to the tag data are configured for sending data, while the so-called sink nodes - that are also assigned to the tag data - are configured for receiving data from (a) specific source node(s). Such a design of the communication paths of the nodes improves the security of the entire system, because outward data flow from the system can be provided by network nodes that are situated at the outside boundary of the system and are configured as source nodes, which allows the external network to only receive the data without requiring access to the system. Constraining the communication paths in this manner is not typical, i.e. is contrary to usual practice; however, by embracing these seemingly disadvantageous limitations the security of the system can be improved significantly.

It has been recognised that by assigning and distributing source and sink node roles to the network nodes it is not necessary to perform dedicated communication between the nodes in relation to sending and receiving data, which reduces the amount of required communication between the nodes, and eliminates the potential errors related to communication, and, furthermore, it does not involve unnecessary bandwidth allocation or unnecessary network loads, while providing efficient operation even in a case of a network comprising redundant nodes.

The system according to the invention has the advantage that the network layers can be scaled in both directions, i.e. on the one hand, certain layers can be expanded by adding further nodes, and on the other hand, the layers can also be implemented in different architectures, for example by combining local and cloud-based solutions, and the layers can also be implemented in a shared manner between different architecture types, while the utilized solutions can be modified/applied according to the current demand of the system, without reprogramming the system or performing significant modifications therein.

The advantages of the invention also include that the structural design and the applied communication method provide that the system is protected against attacks coming both from inside and from outside the network or networks of the system, because by utilizing the communication method it can be ensured that the system's data cannot be accessed from external networks, for example the data cannot be queried from an external network, but the data required by an external network is being sent by system nodes configured as source nodes. If the system is implemented by the combination of local and cloud-based solutions, then the direction of data transfer can also be defined in the system such that the data flows towards the cloud-based layer(s), i.e. the required data can be forwarded by the locally implemented nodes functioning as source nodes to the nodes implemented in the computing cloud functioning as sink nodes, so the nodes implemented in the computing cloud (having an increased exposure to attacks) cannot access the system's data through a query. An advantage of the system is that the attacks coming from the external network can be averted simply by configuring the network nodes, including the assignment of the roles of source and sink nodes, without utilizing additional systems or services that may increase the complexity of the system and may increase operating costs. A further advantage is that the security of the system can be maintained by applying a one-off modification of the node configurations even when the system is re-scaled, i.e. certain layers are relocated to a computing cloud, or when the system is reset to the local implementation.

### BRIEF DESCRIPTION OF THE DRAWINGS

Preferred embodiments of the invention are described below by way of example with reference to the following drawings, where
Fig. 1 illustrates a preferred implementation of a network-distributed process control system having operative nodes distributed in network layers,
Fig. 2 illustrates another preferred implementation of a network-distributed process control system,
Fig. 3 illustrates the assignment and distribution of the node configurations of the operative nodes and a preferred communication connection between the configured operative nodes in the system according to the invention,
Fig. 4 illustrates a preferred realization of communication, for transferring tag data, between operative nodes configured as source nodes and sink nodes in the system according to the invention,
Fig. 5 illustrates another preferred realization of communication, for sending commands to be executed, between operative nodes configured as source nodes and sink nodes in the system according to the invention,
Fig. 6 illustrates a further preferred implementation of the system according to the invention,
Fig. 7 illustrates preferred process steps of local identification in the preferred system according to Fig. 6,
Fig. 8 illustrates preferred process steps of local identification in the preferred system according to Fig. 6 that also includes a central address storage,
Fig. 9 illustrates preferred process steps of accessing a data storage unit in the system according to Fig. 8,
Fig. 10 shows, in the system shown in Fig 8, the preferred steps of the method according to the invention, wherein a command to be executed is sent by a data processing node configured as a sink node to a data acquisition node configured as a source node, and
Fig. 11 shows, in the system shown in Fig 8, the preferred steps of the method according to the invention, wherein a command to be executed is sent by a view node configured as a sink node to a data acquisition node configured as a source node.

### MODES FOR CARRYING OUT THE INVENTION

In the figures, components with the same functions are designated by the same reference numerals, however, the concrete implementation of these may differ from each other.

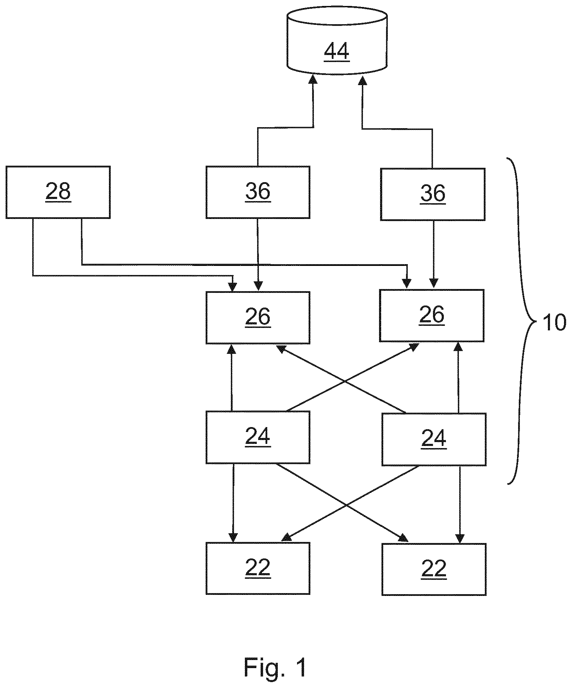

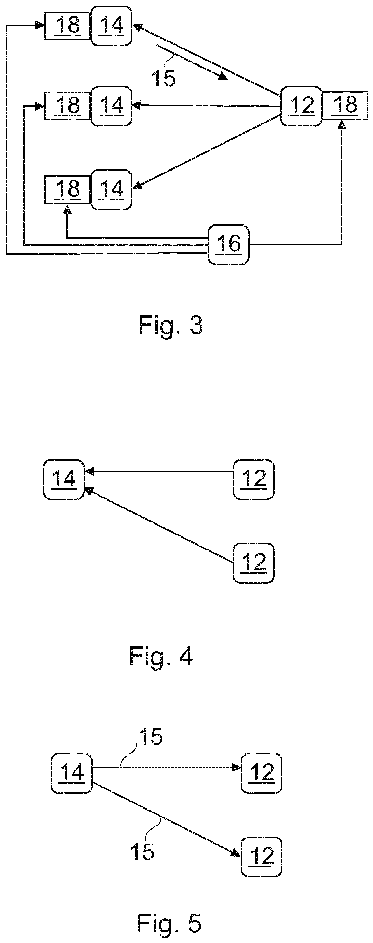

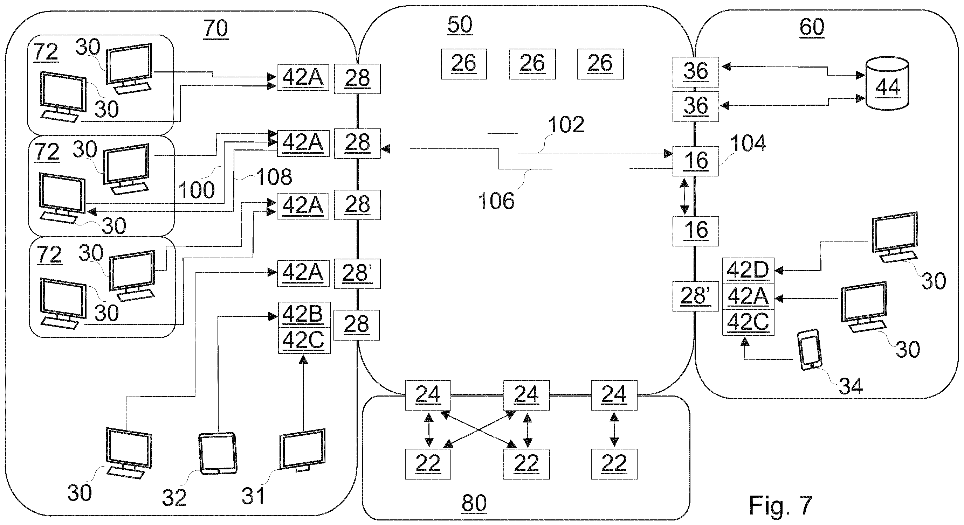

Fig. 1 depicts the schematic structure of an exemplary network-distributed process control system comprising PLCs 22 (Programmable Logic Controllers). The system comprises operative nodes 10 constituting a network, each operative node 10 being configured by a node configuration comprising at least one network role. The operative nodes 10 configured for performing the network role or network roles are arranged into network layers according to their network roles, each network layer comprising one or more operative nodes 10 performing a network role corresponding to the given network layer. The network layers are implemented to enable the addition of further operative nodes 10, preferably, the operative nodes 10 belonging to each network layer constitute a respective common sub-network. The operative nodes 10 located in the different network layers of the system are in a bidirectional communication connection with each other, the primary directions of communication being indicated in Fig. 1 by arrows; however, if necessary, data flow in the system may have directions opposite to the directions indicated by the arrows. An implementation of communication is depicted in more detail in Figs. 3-5 and in Figs. 7-11.

The operative nodes 10 are preferably implemented applying computing devices ; the computing devices can for example be computers, for example industrial computers, personal computers, laptops, tablets, more preferably loT (Internet of Things) devices.

IoT devices are small-size devices with computing capacity that preferably allow any generical embedded operating system to be run on them. IoT devices can also be utilized in industrial environments, because they can be mounted on DIN rails and in industrial enclosures for connection to industrial networks, so they can be preferably applied as the operative nodes 10 of a process control system. IoT devices typically do not have peripherals or display units, so they have the disadvantage that they have to be managed by specially trained personnel, because maintenance personnel cannot access them. In contrast to that, in the system according to the invention, with the exception of replacing failed devices, a direct contact with the loT devices is not required as they are accessible through the network.

The computing devices that are utilized in the system according to the invention are required to have the computing power that is sufficient for performing the network role or roles assigned to the given operative node 10, i.e. a sufficiently high clock frequency and a sufficiently high amount of memory (for example, RAM), and are required to be capable of running an operating system and platform software on their own. The term "platform software" is understood to mean any and all software that is pre-installed on the - as yet not configured - computing devices intended to be operated as operatives node 10, and enables the computing devices to assume and perform at least one, or even all, of the network roles that occur in the network. Thus, after configuration, said computing devices are capable of performing any network role, and thereby, of operation as an arbitrary operative node 10. Preferably, the particular computing devices have an identical platform software, which allows for an even simpler management of the system and the configured operative nodes 10.

Expediently, each operative node 10 has a unique network address, preferably a static IP address, so the operative nodes 10 in the network can also be identified based on their IP address. In order to improve the security of the system, the operative nodes 10 preferably also possess security certificates, the security certificates being generated for the corresponding network addresses. Preferably, the respective certificates of all the operative nodes 10 are recorded in the system, expediently as a part of the network configuration. During the communication between the operative nodes 10, the certificates are preferably also verified, i.e. the communication link is established only if the appropriate certificates exist.

By way of example, the network of the process control system according to the invention is implemented in a way that all network roles of the network are implemented on a separate respective computing device, i.e. each computing device performs a single network role.

In another embodiments, the network of the process control system according to the invention can be implemented in a way that some network roles are implemented on separate respective computing devices, while other network roles are implemented on a combination of more than one computing device, while still other network roles possibly being implemented collectively on a single respective computing device.

In the system according to the invention the network layers are implemented to enable the addition of further operative nodes 10, i.e. the network layers can be expanded or scaled by adding operative nodes 10 configured to perform a network role corresponding to the respective network layer (horizontal scaling). Preferably, an active or master-mode operative node 10, or an operative node 10 operating in a passive or slave mode in a redundant fashion can also be added in the network layer. The preferred embodiment of the system shown in Fig. 1 comprises, as a network layer, a data acquisition layer comprising data acquisition nodes 24 configured for a data acquisition network role, a data processing layer comprising data processing nodes 26 configured for processing the acquired data, a presentation layer comprising a view node 28 configured for displaying the data of the system, and an archiving layer comprising archiving nodes 36 that are adapted for storing system data, or for archiving or saving the data to an external storage, for example, a data storage unit 44, preferably a database.

In a preferred embodiment according to Fig. 1, the system comprises two PLCs 22 that for example perform industrial process control tasks. In the PLCs 22, data are stored in so-called "tags". Such data are hereinafter referred to as "tag data". Therefore, a tag data is a data located at a given memory allocation site, i.e. are stored at well-defined memory locations from where the tag data can be read out or retrieved.

The data acquisition nodes 24 of the data acquisition layer are operative nodes 10 configured for preferably performing data acquisition tasks, as well as performing communications tasks, wherein the data acquisition nodes 24 are connected to the PLCs 22, and being adapted for reading out the tag data from the PLCs 22, and then make the data accessible for other operative nodes 10 of the system. In a preferred embodiment according to the figure, two data acquisition nodes 24 that form a redundant component pair are connected to the PLCs 22. The redundancy of the data acquisition nodes 24 is implemented by any applicable technical solution, for example by a technical solution known from the state of the art. Preferably, both data acquisition nodes 24 are operative nodes 10 operating in active or master mode in a manner providing their identical operation, wherein the identical operation is ensured by their synchronisation. The data acquisition layer can preferably comprise more than one data acquisition nodes 24, where certain groups, or possibly all, of the data acquisition nodes 24 are implemented to provide for their redundant operation, their redundancy being implemented as set forth hereinabove.

In the preferred embodiment according to Fig. 1, the data acquisition nodes 24 are connected to the data processing nodes 26 belonging to the data acquisition layer, and are adapted for transferring the tag data read out from the PLCs 22 to the data processing nodes 26. The data processing nodes 26 are preferably operative nodes 10 that are configured for processing and evaluating the data, preferably tag data, made available to the network by the data acquisition nodes 24. The data processing nodes 26 are preferably implemented such that they are able to generate and transmit error signals. The data and the error signals processed by the data processing node 26 can be retrieved, displayed and can also be stored.

The system according to Fig. 1 comprises two data processing nodes 26 that are implemented as the redundant counterparts of each other. In the case of the data processing nodes 26, redundancy can also be implemented by any applicable technical solution, even a technical solution known from the prior art, for example by a master-slave setup.

Preferably, one or more view nodes 28 and/or one or more archiving nodes 36 are connected to the data processing nodes 26.

Processed data are preferably displayed by means of view nodes 28 that are operative nodes 10 configured for data display and data access tasks. The HMI (Human-Machine Interface) functions of the network, for example functions like modifying the settings and the network configuration of the system, can preferably be accessed via the view nodes 28.

The display of data preferably also involves the application of a graphical user interface (GUI). The graphical user interface is preferably connected to the view node 28, for example to a web server adapted for implementing the view node 28, or to the computing device(s) adapted for implementing the view node 28, providing access to system data by means of the display monitor thereof.

Preferably, at least one of the following functions can be accessed utilizing the graphical user interface:
- network overview,
- status check of the operative nodes 10,
- identification of failed operative nodes 10,
- management of network identifiers of the operative nodes 10,
- confirmation of the node configuration received by the operative nodes 10, and
- the initialization of the network.

Preferably, several different views - that for example provide different levels of access to the system - can be set on the graphical user interface. The graphical user interface can be preferably set as:
- a developer view, wherein engineers can for example modify the network configuration of the system, including the node configuration of the operative nodes 10; this view requires special access permissions, and can be preferably accessed and edited simultaneously by multiple engineers,
- a maintenance view, wherein information related to the maintenance of the system can be displayed with limited possibility for modification; preferably only the name and the network path or IP address of the operative nodes 10 can be changed, and
- an operator view, wherein the operator of the plant or industrial facility created in the developer view can intervene in the operation of the entire system or certain components thereof.

The above functions are preferably performed by the graphical user interface in a simple, straightforward manner that is easily comprehensible even by non-specially trained operator or maintenance personnel.

A request for displaying the processed data can be initiated from any device that is capable of displaying data, for example a computer, a tablet and/or a mobile phone, preferably a smartphone. The request can be initiated utilizing the graphical user interface and/or utilizing a command-line interface. The devices adapted for displaying data are connected to a view node 28 of the network, and query the processed data from the data processing node 26 via the view node 28, i.e. the communication to the data processing nodes 26 is preferably initiated by the view node 28. The view nodes 28 are also adapted for managing the data access and modification permissions of the devices capable of displaying data. Preferably, the permission for data access and modification is granted by the view node 28 only after identification, and, on the other hand, data access is also limited based on the network identifier and on geolocation.

If the system comprises more than one view nodes 28, then, on the one hand, the scope of the data accessible through the different view nodes 28 may differ from each other, and on the other hand, different access and modification permissions can be granted in relation to the same network data.

By way of example, permission for modifying certain network data and settings is granted by the view nodes 28 of the system only if the related query was received from a physical portion of the system.

In another example, different particular view nodes 28 allow access to different network data, for example, the modification of the network configuration of the system is only allowed from certain designated view nodes 28 provided that the required permissions are present.

The view nodes 28 are implemented preferably as a server, more preferably as an HTTP server. They provide access to system data, preferably to data and error signals provided by the data processing nodes 26 and to the network configuration of the system, for one or more devices capable of displaying data. The devices capable of displaying data can be connected to the view nodes 28 as a thin client. In the preferred embodiment according to Fig. 1, the view node 28 does not have a redundant counterpart. If the system also comprises more than one view nodes 28, it is expedient to provide the redundancy of the view nodes 28 by applying backup view nodes 28, because due to the different access permissions applied at the different view nodes 28 it is not possible for a particular view node 28 to fully substitute for another (failed) view node 28.

In addition to being queried and displayed, the data processed by the data processing nodes 26 can also be stored applying one or more archiving nodes 36 connected to the data processing nodes 26. The archiving node 36 is implemented as an operative node 10 adapted for archiving, storing, or transmitting for storage the data related to the system. In the preferred embodiment according to Fig. 1, the system comprises two archiving nodes 36 preferably adapted to operate in a redundant manner; redundancy can even be implemented by applying a prior art technical solution.

The processed data available on the data processing nodes 26 are preferably transferred by the archiving node 36 to a data storage unit 44. In another preferred implementation of the system, the archiving nodes 36 are also in connection with the data acquisition nodes 24, and are adapted to transfer also the tag data acquisition from the PLCs 22 by the data acquisition nodes 24 to the data storage unit 44. The data storage unit 44 can be implemented locally, for example in a local server computer, or even in an external network, for example in a computing cloud. The advantage of data storage on an external network is, among others, easy expandability, however, the interruption of the link to the external network can lead to inaccessibility of the data stored in the external network.

The archiving node 36 is preferably implemented for temporary storing or buffering of system data, for example processed data, and of tag data, that even the loss of connection to the data storage unit 44 does not cause data loss. In case the archiving node 36 loses connection to the data storage unit 44, the archiving node 36 will buffer the data to be transferred to the data storage unit 44 until the data storage unit 44 becomes accessible again, or until the archiving node 36 runs out of storage space. As soon as the data storage unit 44 is accessible again, the archiving node 36 transfers the contents of its temporary storage or buffer to the data storage unit 44. The archiving node 36 preferably stores data only for the time the data storage unit 44 is in an inaccessible state, i.e. during normal operation it continuously transfers the data.

The different network layers of the system according to the invention can be implemented by applying different architectures, because the network layers are implemented to be prepared for operating in a computing cloud and on a local computing device. The implementations illustrated in Examples 1-4 below can be transformed into each other, for example by relocating one or more network layers into a computing cloud, or conversely, to the local device, whereby the vertical scaling of the process control system according to the preferred embodiment of Fig. 1 can be implemented.

### Example 1 (Local solution)

The preferred process control system according to Fig. 1 is preferably implemented locally, i.e. all of the network layers of the system according to Fig. 1 are implemented on a local computing device (locally), while the data storage unit 44 is preferably also implemented on a local computing device, for example a server computer, i.e.
- the data acquisition layer is implemented locally,
- the data processing layer is implemented locally,
- the archiving layer is implemented locally, and
- the presentation layer is implemented locally.

### Example 2 ("Fog computing" solution)

The term "fog computing" refers to architectures that are implemented partially locally and partially in a computing cloud. The advantage of this solution is that the operation of the system or the manufacturing process is not halted in case the computing cloud or the external network becomes inaccessible. Preferably, the network layers that are in close connection to the users and/or, in the system according to the invention, to the PLCs 22 are implemented locally, while the data storage unit 44 is preferably implemented in a computing cloud, and
- the data acquisition layer is implemented locally,
- the data processing layer is implemented locally,
- the archiving layer is implemented locally, and
- the presentation layer is implemented locally or in a computing cloud.

### Example 3 ("Fog computing" solution with a shared data processing layer)

Like in Example 2, a preferred process control system according to Example 3 is implemented partly locally and partly in a computing cloud, however, the data processing layer and the archiving layer are implemented in a shared fashion, locally and in the computing cloud; parts of the layers adapted for managing critical data, for example manufacturing data or recipes are implemented locally, that the interruption of the link to the computing cloud or to another external network does not hinder the basic operation of the system or the manufacturing process, while parts of the system adapted for managing data that are less critical for system operation is implemented in a computing cloud, and the data storage unit 44 is also located in a computing cloud. Thus:
- the data acquisition layer is implemented locally,
- the data processing layer being implemented:
   - locally for critical data,
   - in a computing cloud for general data;
- the archiving layer being implemented:
   - locally for critical data,
   - in a computing cloud for general data, and
- the presentation layer is implemented locally or in a computing cloud.

### Example 4 (Cloud-based solution)

In a cloud-based implementation of a preferred process control system, all network layers except for the data acquisition layer - which is in direct contact with the PLCs 22 - are implemented in a computing cloud, together with the data storage unit 44, i.e.
- the data acquisition layer is implemented locally,
- the data processing layer is implemented in a computing cloud,
- the archiving layer is implemented in a computing cloud, and
- the presentation layer is implemented in a computing cloud.

Due to the direct contact with the PLCs 22, the data acquisition layer is preferably always implemented on a local computing device, while the other layers can even be implemented in a computing cloud. The data processing layer and the archiving layer preferably scale together vertically, i.e. are implemented by applying an identical architecture (locally or in a computing cloud), because the archiving layer preferably archives the data of the data processing layer, however, horizontally the data processing layer and the archiving layer can be scaled differently, i.e. to meet actual needs the data processing layer and the archiving layer of the system may contain a different number of operative nodes 10. For example, if data processing requires high computing capacity, then the system preferably contains more data processing nodes 26 than archiving nodes 36. In another example, in case a higher buffering capacity is needed, the system preferably contains more archiving nodes 36 than data processing nodes 26.

Fig. 2 shows another preferred implementation of the system having a different arrangement than Fig. 1. In Fig. 2, only one operative node 10 is shown in each network layer, but, as it was set forth above in relation to Fig. 1, each network layer of the system can of course comprise more than one operative nodes 10 configured for performing the network role(s) corresponding to the particular network layer, by way example data acquisition nodes 24, data processing nodes 26, view nodes 28 and archiving nodes 36.

Fig. 2 also indicates networks of the system that can be separated from each other, the networks preferably being interconnected by way of certain operative nodes 10 of the network. The system preferably comprises a SCADA process control network 50, a corporate network 60, an operator network 70, and an industrial network 80.

The SCADA process control network 50 comprises as an operative node 10 a data acquisition node 24, a data processing node 26, a view node 28, an archiving node 36 and also a configuration node 16 as already described above in relation to Fig. 1. The role played by the configuration node 16 in the system is illustrated in more detail in Fig. 3. Preferably, each of the operative nodes 10 constituting the SCADA process control network 50 has only a single network connection to the SCADA process control network 50, and thereby, in case any operative node 10 fails or becomes inaccessible, this failure can be detected at the same time in the entire SCADA process control network 50. Preferably, no device can be connected to the SCADA process control network 50 that for example can be directly accessed by a user, so an attack cannot be launched against the system from the SCADA process control network 50, which improves the system's security.

The SCADA process control network 50 is connected to the industrial network 80 through the data acquisition node 24, as described above in relation to Fig. 1, the data acquisition node 24 is connected to a PLC 22 of the system, and is adapted for collecting/acquiring the data recorded by the PLC 22. The process control system is especially sensitive to a potential overloading of the connection between the PLC 22 and the data acquisition node 24, because, on the on hand, overloading may result in data loss, and on the other hand, it may happen that the system notices certain error signals or alarms belated. A separate industrial network 80 ensures that the connection between the PLC 22 and the data acquisition node 24 is not affected by the communication between other operative nodes 10, which improves the security of the system.

The operator network 70 is connected to the SCADA process control network 50 through a view node 28. The view node 28 is the only point of the system according to Fig. 2 where users can interact with the SCADA process control network 50. Preferably, the view node 28 is adapted for providing access to the SCADA process control network 50 for devices in the operator network 70 adapted for displaying data, for example computers 30, a display 31 and a tablet 32. In the operator network 70 traffic only occurs between the devices adapted for displaying data and the view node 28. As it was described above in relation to Fig. 1, the devices adapted for displaying data are connected to the view node 28 as thin clients, which ensures that the users cannot directly access the SCADA process control network 50, so malicious software from the users' devices adapted for displaying data and from external data storage devices connected thereto cannot damage or affect the operation of the system.

In the embodiment according to Fig. 2, the corporate network 60 is connected to the SCADA process control network 50 at two places, through the archiving node 36 and the configuration node 16. Preferably, as shown in the figure, both the archiving node 36 and the configuration node 16 communicate only in the direction of the corporate network 60, i.e. it is not necessary to provide outbound access from the corporate network 60 to the SCADA process control network 50; access can be preferably blocked by applying appropriate settings to firewalls 40 introduced between the corporate network 60 and the archiving node 36 and/or the configuration node 16.

In the system according to Fig. 2, the archiving node 36 saves data to the data storage unit 44 implemented in the corporate network 60. Communication related to saving data is always directed from the archiving node 36 to the data storage unit 44, other communication can be prevented by the settings of the firewall 40 arranged between the archiving node 36 and the data storage unit 44. In case, for example, the data already saved to the data storage unit 44 need to be displayed, the view node 28 is connected to the archiving node 36 through a connection not shown in the figure, and can access the data contained in the data storage unit 44 through the archiving node 36. Communication with the data storage unit 44 requesting data access is initiated by the archiving node 36, so the direction and type of communication is identical to that was described above related to saving data.

If the data storage unit 44 is implemented in a computing cloud 20, and the archiving layer of the archiving node 36 is implemented locally, then it is especially important to ensure that the archiving node 36 cannot be accessed from the computing cloud 20; thereby, attacks launched from the Internet can be prevented, i.e. the system is also protected from such attacks.

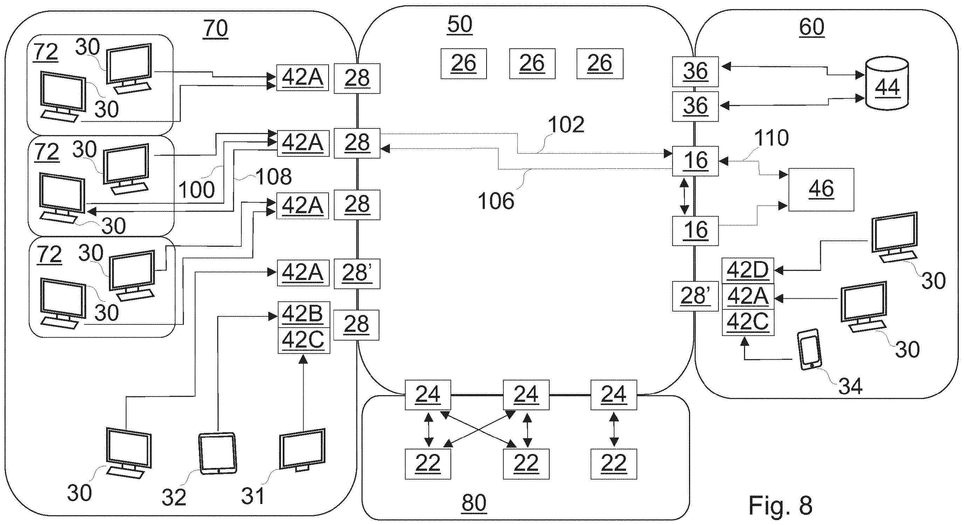

In the arrangement according to Fig. 2, the network roles of the configuration node 16 include the storage and distribution of node configurations corresponding to the operative nodes 10 of the network and the identification of users. For receiving and storing network configuration, and for user identification, the configuration node 16 is connected to a computing cloud and/or a server computer and/or a computer cluster. The data related to user identification are preferably stored by the configuration node 16 in its own memory and/or in an external storage unit, preferably in a central address storage 46. Preferred process steps of user identification performed locally, utilizing the memory of the configuration node 16, are illustrated in more detail in Fig. 7, while preferred process steps of user identification by applying a central address storage 46 are illustrated in more detail in Fig. 8. Preferably, other operative nodes 10, for example the archiving node 36 can also be configured for providing user identification. In such a case, the configuration node 16 is not necessarily located at the boundary between the SCADA process control network 50 and the corporate network 60, so the configuration node 16 can also be arranged within the SCADA process control network 50. The operative node 10 configured for performing user identification is preferably arranged at the boundary between the SCADA process control network 50 and the corporate network 60, wherein the data related to identification is stored in the memory thereof, or this operative node 10 is adapted to be in contact with the central address storage 46.

In the preferred system according to Fig. 2, the configuration node 16 is connected to a central address storage 46 arranged in the corporate network 60 through a firewall 40, the central address storage 46 being adapted for storing the data related to user identification. The central address storage 46 can preferably also be implemented by applying a service known from the prior art, for example LDAP (Lightweight Directory Access Protocol). For identifying a user, the configuration node 16 has to access the central address storage 46, which access can be preferably performed according to the access process described in relation to the archiving node 36, i.e. a contact to the central address storage 46 implemented in the corporate network 60 is established by the configuration node 16, and it is not necessary that the central address storage 46 can access the configuration node 16. Connections initiated by the central address storage 46 can be blocked by applying appropriate settings at the firewall 40 arranged between the configuration node 16 and the central address storage 46. The central address storage 46 can also be preferably implemented in a computing cloud 20, in which case the points made above related to the archiving node 36 are also applicable to the configuration node 16.

In the preferred implementation of the system according to Fig. 2, the corporate network 60 is also in connection with the Internet, preferably with a computing cloud 20, through a firewall 40 that is adapted for ensuring secure communication; however, for security reasons the other networks of the system, for example the SCADA process control network 50 and the operator network 70 are not connected to the Internet.

Fig. 3 illustrates a preferred implementation of a communication between the operative nodes 10 constituting the network in the network-distributed process control system comprising a PLC 22 according to the invention.

In the course of the communication method according to the invention, the tag data of the PLCs 22 of the process control system are read out by an operative node 10, preferably a data acquisition node 24, and the data are made accessible for other operative nodes 10 of the system. At least one operative node 10 configured as a source node 12 and at least one operative node 10 configured as a sink node 14 is assigned to each tag utilized in the system. The network roles of source node 12 and sink node 14 are preferably assigned together with the node configuration, and they can be modified through modifying the node configuration, for example if the structure of the system is reorganised. A bidirectional communication connection is established between the nodes of each node pair that is assigned to the same tag and consists of a source node 12 and a sink node 14, in the course of which the tag data are transferred from the source node 12 to the sink node 14, and a command 15 to be executed related to the tag data of the assigned tag or to the scheduling of the data transfer is sent from the drain node 14 to the source node 12.

Each operative node 10 preferably has a configuration receiving unit 18 adapted for receiving the node configurations assigned to the operative node 10. Preferably, at least one of the operative nodes 10 of the system is implemented as a configuration node 16 adapted for storing and assigning/distributing the node configurations of the rest of the operative nodes 10. The configuration node 16 is preferably adapted for storing and assigning/distributing the node configurations of all of the operative nodes 10 that are connected to it. The assigned node configuration preferably contains, in addition to the network role or roles of the operative node 10, information related to the network layer(s) corresponding to the assigned network role(s), and/or the network roles of source node 12 and sink node 14 corresponding to the tags utilized in the system.

In a preferred embodiment according to Fig. 3, the system comprises a source node 12 and three sink nodes 14 that correspond to a given tag data, said nodes being configured by the configuration node 16 through the configuration receiving units 18. The tag data are transferred from the source node 12 towards the sink nodes 14 in directions indicated by the arrows. The tag data are transferred to the sink node 14 by the source node 12 preferably at a specific resend time characteristic of a tag, or upon the change of the tag data. The node configuration of the source nodes 12 preferably also contains information specifying the sink nodes 14 to which the tag data have to be sent, while the node configuration of the sink nodes 14 preferably also contains information specifying the source nodes 12 from which the tag data are to be accepted.

The bidirectional communication connection between the source node 12 and the sink node 14 comprises potentially sending a command 15 to be executed from the sink nodes 14 to the source node 12, the command 15 preferably being a tag data write request, and/or containing a message adapted to control the scheduling of sending tag data. The tag data write request preferably comprises a name of the tag and a value to be written to the tag.

Preferably, two types of characteristic time belong to each tag: a resend time and a wait time. The elapsed time of the resend interval is measured by the source node 12, wherein the resend time is the time interval after which the source node 12 has to resend the tag data to the respective sink nodes 14, even if the value of the tag data has not changed. The duration of the resend interval is preferably included in the node configuration of the source node 12. When the tag data are sent out, irrespective of whether it was sent because the resend time has elapsed or because the tag data have been changed, the measurement of the resend time is restarted.

The wait time is preferably measured by the sink node 14, restarting the corresponding timer each time a tag data is received. The wait time is preferably included in the node configuration of the sink node 14. The sink node 14 expects that the tag data are sent within the wait time, and it marks the tag data received after the wait time has elapsed, and also marks the corresponding tag, because receiving tag data after the wait time has elapsed may indicate a communication problem, while the value of the tag data will also not be reliable as it could correspond to an earlier state of the system. After receiving the tag data, the marking is removed from the tag by the sink node 14.

In the system according to the invention, for example in the preferred embodiment according to Fig. 1, the data acquisition nodes 24 are configured as source nodes 12, while the data processing nodes 26 are preferably configured as sink nodes 14. In the system, the communication method according to the invention is not limited to only transferring the tag data of the PLCs 22, but for example it can also be applied for data that are processed and stored, preferably also tag related data, by the data processing nodes 26, in which case the data processing node 26 is implemented as a source node 12, and the archiving node 36 is configured as a sink node 14. As can be seen from the example of the data processing node 26, the same operative node 10 can perform more than one network role at the same time, i.e. the roles of a source node 12 and a sink node 14 for processing different data.

Fig. 4 illustrates a preferred realization of communication, for transferring the tag data, between operative nodes 10 configured as source nodes 12 and sink nodes 14 in a section of the system according to the invention. The section of the system depicted in Fig. 4 comprises two source nodes 12 and a sink node 14 for transferring the same tag data, i.e. the same piece of tag data is transferred to the same sink node 14 by two source nodes 12. Preferably, the two source nodes 12 operate in a redundant manner, more preferably, both source nodes 12 are operative nodes 10 operating in active or master mode, and are synchronized with each other to ensure that they operate identically. Preferably, a preference order related to the tag data is established by the sink node 14 among the source nodes 12 connected to it, i.e. it specifies primary, secondary, etc., source nodes 12, and the tag data are utilized based on this preference order, or in case no preference order is applied, the sink node 14 can utilize the tag data received from all source nodes 12. In case one of the source nodes 12 fails or becomes inaccessible, the sink node 14 will receive the tag data from the other identically operating source nodes 12.

If more than one source nodes 12 are assigned to the same tag data, the sink nodes 14 can adjust the sending schedule of the tag data for optimal bandwidth use. By way of example, if two source nodes 12 apply a resend time of 1000 ms, and both send their tag data to the sink node 14 at the same time, then the sink node 14 may reschedule data transfer from another, arbitrarily selected source node 12 by sending a command 15 to the source node 12, which command 15 preferably contains a request related to delaying the initiation of the data transfer by 500 ms. In this case both source nodes 12 shown in Fig. 4 will still send the tag data by applying a resend time of 1000 ms, but one of the source nodes 12 will apply a relative delay of 500 ms with respect to the other source node 12 for sending the tag data. The sink node 14 will therefore receive tag data at 500 ms intervals, alternately from both source nodes 12, which, in addition to improved bandwidth utilization, also reduces the chance of a potential data loss.

Preferably, other features of the source nodes 12 and the sink nodes 14 described above in relation to Fig. 3 are also present here.

Fig. 5 illustrates another preferred realization of communication, for sending commands 15 to be executed, between operative nodes 10 configured as sink nodes 14 and source nodes 12 in a section of the system according to the invention. The section of the system depicted in Fig. 5 comprises two source nodes 12 adapted for transferring the same tag data, and a sink node 14.

Preferably, both source nodes 12 are active operative nodes 10 operating in master mode, and the operative nodes 10 are adapted to operate identically in a manner set forth in relation to Fig. 4. In such a system, the commands 15, or the sequence of commands 15 to be executed that are sent from the sink nodes 14 to the source nodes 12 have to be controlled that each command 15 is executed at only one source node 12, i.e. that a command 15 is not executed twice, for example at both source nodes 12; and also that the different commands 15 are executed sequentially, one after the other, and not in a parallel manner at different source nodes 12. The above constraints on executing the commands 15 ensure the reliable operation of the system.

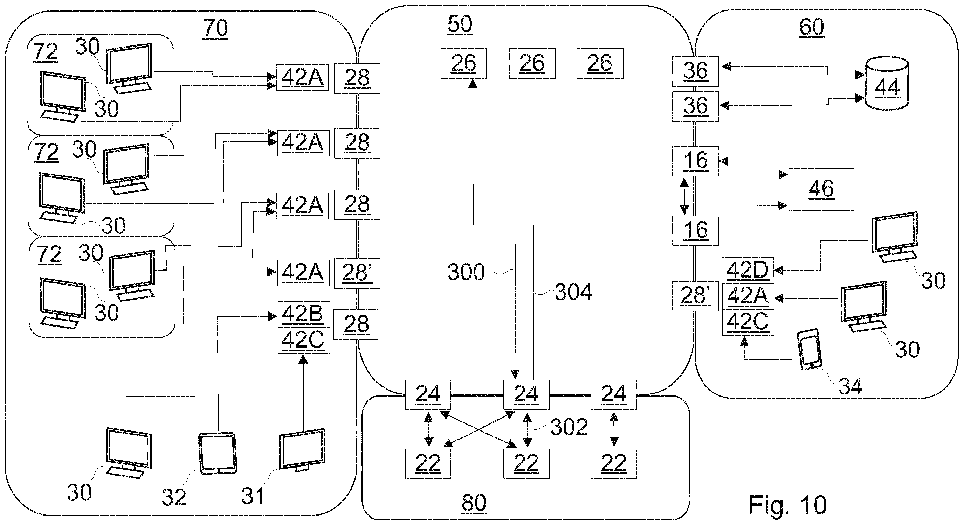

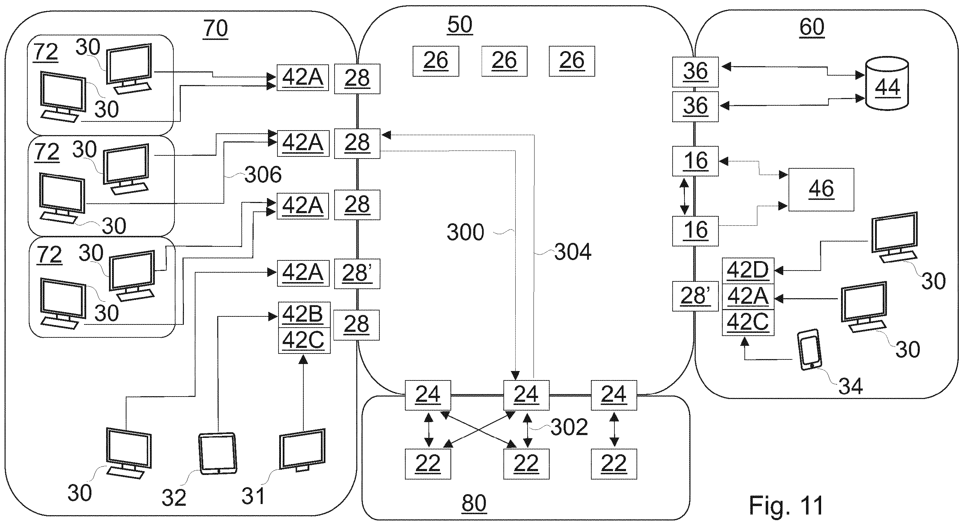

To enable the sequential (non-parallel) execution of the commands 15, the commands 15 to be executed sent from the sink nodes 14 to the source nodes 12 have to be ordered in a queue. The first command 15 to be executed in the queue is executed at one of the source nodes 12, preferably the source node 12 preferred by the sink node 14, or if it is inaccessible, at the other source node 12. While the execution of a command 15 is in progress, no command 15 to be executed is executed at any other source node 12. After executing the command 15, the source nodes 12 are synchronized with each other, that they can keep operating identically, and the executed command 15 is removed from the queue. Then, the commands 15 to be executed contained in the queue are executed sequentially. The new commands 15 to be executed arriving during the execution process are put at the end of the queue. The steps of executing the commands 15 in a preferred implementation of the process control system is illustrated in Figs. 10 and 11.

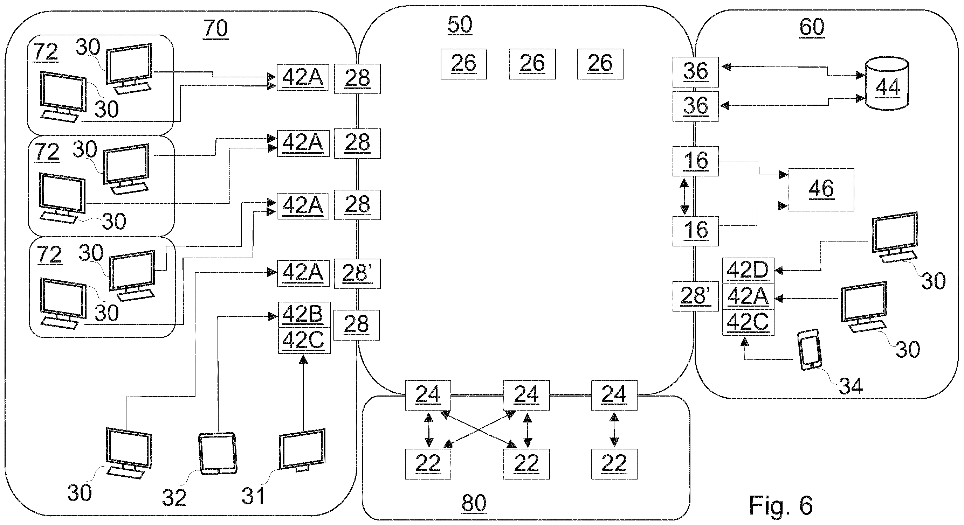

Fig. 6 illustrates a further preferred embodiment of the system according to the invention. As with the embodiment according to Fig. 2, the system comprises multiple interconnected networks, i.e. a SCADA process control network 50, a corporate network 60, an operator network 70, and an industrial network 80. The networks are preferably interconnected by specific operative nodes 10 of the system according to the invention that are adapted to function as gateways between the networks.

In the preferred embodiment according to Fig. 6, the different network layers comprise a different number of operative nodes 10. In the system according to the figure, the data acquisition layer comprises three data acquisition nodes 24 that are adapted for acquiring tag data from three PLCs 22. The data processing layer comprises three data processing nodes 26, the connections of which to the other operative nodes 10 are not shown in the figure for the sake of simplicity and clarity. The presentation layer comprises six view nodes 28, one of which being adapted for interconnecting the SCADA process control network 50 with the corporate network 60 rather than with the operator network 70, thereby allowing the users of the corporate network 60 to access the operative nodes 10 of the SCADA process control network 50. The archiving layer comprises two archiving nodes 36 that are preferably operated redundantly. The system further comprises two preferably mutually redundant configuration nodes 16 that operate in master mode and are adapted for storing and assigning/distributing the node configurations, and for identifying users.

The operative nodes 10 of the SCADA process control network 50 comprises data acquisition nodes 24, data processing nodes 26, view nodes 28, archiving nodes 36 and configuration nodes 16 that have already been described in relation to Fig. 1. For the sake of clarity, the interconnections between the operative nodes 10 constituting the SCADA process control network 50 and the redundant counterparts of certain operative nodes 10 are not shown in the figure. Preferably, each of the operative nodes 10 constituting the SCADA process control network 50 has only a single network connection to the SCADA process control network 50, and thereby, in case any operative node 10 fails or becomes inaccessible, this failure can be detected at the same time in the entire SCADA process control network 50.

The data acquisition nodes 24 of the SCADA process control network 50 are connected to the PLCs 22 of the industrial network 80. The preferred embodiment according to Fig. 6 comprises a data acquisition node 24 that is connected to one PLC 22, and two data acquisition nodes 24 that are both connected to the same two PLCs 22 and both are operated in master mode, as redundant counterparts of each other. The data acquisition nodes 24 are preferably also configured for the network role of a source node 12, of which the respective sink nodes 14 are for example implemented as data processing nodes 26. The data acquisition nodes 24 constituting a redundant pair preferably have the features described in relation to Fig. 4 above, while the standalone data acquisition node 24 has the features described with reference to Fig. 3. However, the number of the data processing nodes 26 (configured as sink nodes 14) connected to the data acquisition nodes 24 can be different from what is illustrated in Figs. 3 and 4.

The operator network 70 is connected to the SCADA process control network 50 through view nodes 28, one of which is a view node 28' configured for enabling the editing of the node configurations stored in the configuration node 16. Preferably, the editing of the network configuration of the configuration nodes 16 can only be initiated through the view node 28'. The view nodes 28 are preferably adapted for providing access to the SCADA process control network 50 for the devices in the operator network 70, for example the computers 30, display 31 and tablet 32, through a graphical user interface 42A-42C. The graphical user interface 42A preferably provides general access to the process control system, while the graphical user interface 42B provides access for managing the devices, for example by way of the maintenance view described above in relation to Fig. 1, and the graphical user interface 42C can be utilized for providing a system status overview on a display 31, preferably on a screen.

In the preferred embodiment according to the figure, the operator network 70 comprises smaller units, preferably operator areas 72. In the preferred embodiment according to Fig. 6, three operator areas 72 are implemented in the operator network 70, each of which comprises at least one computer 30 adapted for providing access for the users working in the operator areas 72 to system data, for example to the data acquired by the data acquisition nodes 24 and processed by the data processing nodes 26, through the graphical user interface 42A of the view nodes 28.

The system comprises a view node 28', configuration nodes 16 and archiving nodes 36 adapted to interconnect the corporate network 60 with the SCADA process control network 50, wherein the view node 28' is also configured to allow the editing of network configuration, that, by possessing the required permissions, editing of the network configuration can be initiated also from the corporate network 60. The view node 28' provides a general access to the system data, for example for a computer 30, through the graphical user interface 42A, the graphical user interface 42C displays system data on a smartphone 34, and through the graphical user interface 42D an analysis of system data can be performed by a computer 30.

The data storage unit 44 that is preferably implemented as a database to which the archiving nodes 36 transfer data for storage as described in relation to Fig. 1, and is connected to the archiving nodes 36, is preferably located in the corporate network 60. The central address storage 46, to which both redundantly operating (preferably, in master-mode) configuration nodes 16 are connected preferably for identifying the system's users, is preferably implemented in the corporate network 60.

For ensuring the secure operation of the system it is required that the users can only access the system after they have been identified. The information and data related to access rights and permissions can be stored either locally, in the memory of the configuration node(s) 16, or in the central address storage 46. In order to check access permissions, the system compares the data provided by the user with the data that are stored either in the configuration node(s) 16 or in the central address storage 46, and grants or denies access to the system based on the result of the comparison.

Fig. 7 illustrates the preferred process steps of local user identification in the preferred system according to Fig. 6. In the course of the identification process, in a logon step 100, user data are entered by a user utilizing a device adapted for displaying data that is connected to a view node 28, 28' of the system (in the example according to the figure, utilizing a computer 30 of the operator area 72 of the operator network 70). The user data are then transferred in an encrypted manner to the view node 28 connected to the computer 30. In a data transfer step 102, logon data are transferred, preferably in encrypted form, to one of the redundantly operating configuration nodes 16 by the view node 28. In a local identification step 104, the user data are compared by the configuration node 16 with the data stored in its memory, followed by returning the result of the comparison, preferably in encrypted form, to the view node 28 in a result sending step 106. Depending on the result, in a logon or access denial step 108 the view node 28 either logs on the user, or, due to missing permissions, denies the access request. After a successful logon, the functions of the system can be preferably accessed according to the permissions assigned to the user and to the view node 28, 28' that initiated the logon request.

The encryption applied in the logon step 100, the data transfer step 102 and/or the result sending step 106 is preferably implemented by applying asymmetric-key encryption, but other prior art encryption solutions can also be applied.

Fig. 8 illustrates the preferred process steps of local identification in the preferred system according to Fig. 6 that also includes a central address storage 46. Most of the depicted steps are identical to the steps described above in relation to Fig. 7, i.e. in a logon step 100, user data are entered by a user utilizing a device adapted for displaying data that is connected to a view node 28, 28' of the system (in the example according to the figure, utilizing a computer 30 of the operator area 72 of the operator network 70). The user data are then transferred in an encrypted manner to the view node 28 connected to the computer 30. In a data transfer step 102, the logon data are transferred, preferably in encrypted form, to one of the redundantly operating configuration nodes 16 by the view node 28. In an address storage identification step 110, the user data are compared by the configuration node 16 connected to the central address storage 46 with the data stored in the central address storage 46, followed by returning the result of the comparison, preferably in encrypted form, to the view node 28 in a result sending step 106. Depending on the result, in a logon or access denial step 108 the view node 28 either logs on the user, or, due to missing permissions, denies the access request. After a successful logon, the functions of the system can be preferably accessed according to the permissions assigned to the user and to the view node 28, 28' that initiated the logon request.

The encryption applied in the logon step 100, the data transfer step 102 and/or the result sending step 106 is preferably implemented by applying asymmetric-key encryption, but other prior art encryption solutions can also be applied also in this case.

In some cases, there is a need for displaying the saved or archived data in process control systems. Fig. 9 illustrates preferred process steps of accessing a data storage unit 44 in the system according to Fig. 8, in the course of which the data stored in the data storage unit 44 can be retrieved. To ensure the secure operation of the system, the users can access the system only through the view nodes 28, 28', for which reason the saved and archived data are queried also through the view nodes 28, 28'.

Preferably after user identification, and preferably after the identification process according to Fig. 7 or Fig. 8, in a data query step 200 the user sends, preferably from a computer 30 or other device adapted for displaying data, a request for displaying the saved and archived data to a view node 28, 28', in the example according to Fig. 9, a view node 28 adapted for interconnecting the SCADA process control network 50 and the operator network 70. In a data query transfer step 202, the request is transferred by the view node 28 to an archiving node 36 that, in a data access step 204 retrieves the appropriate data from the data storage unit 44, and then returns the data to the view node 28 in a data sending step 206. Preferably in a data transfer step 208, the view node 28 transfers the data queried from the data storage unit 44 to the device adapted for displaying data that initiated the query, in the example according to the figure, the user's computer 30 located in the operator network 70, where the queried data can be utilized or displayed as needed.

Fig. 10 shows, in the system shown in Fig 8, preferred steps of the method according to the invention, wherein a command 15 to be executed is sent by a data processing node 26 configured as a sink node 14 to a data acquisition node 24 configured as a source node 12.

In the example according to the figure, in a command sending step 300, a command 15 to be executed containing a query related to the tag data corresponding to the tag assigned to the data processing node 26 (functioning as a sink node 14) is sent by the data processing node 26 to the data acquisition node 24 that is configured as a source node 12 regarding the given tag data. Sending of the command 15 is preferably initiated by a program running on the data processing node 26, for example in order to start the manufacturing of a new item by the process control system adapted to control the manufacturing process, which requires setting new parameter values in the PLCs 22. According to the disclosure related to Fig. 5 hereinabove, the command 15 to be executed is entered in a queue containing the commands 15 to be executed, and the command sending step 300 is carried out when there are no earlier commands 15 to be executed in the queue, and when the execution of the last command 15 to be executed has been completed. At this point, in the command sending step 300, the command 15 to be executed in sent by the data processing node 26, and is executed, in an execution step 302, by one of the redundantly operating data acquisition nodes 24, i.e. a tag value is modified by said data acquisition node 24 as specified in the command 15. After completing the execution step 302 it is not required to synchronize the redundant data acquisition nodes 24, because the operation of the data acquisition nodes 24 themselves is not modified in the course of executing the command 15, i.e. they will still be adapted for reading out the values of the tags specified in their node configurations.

After executing the command 15, in a feedback step 304 the data acquisition node 24 that executed the command 15 sends feedback to the data processing node 26 on the result of executing the command 15, such that the executed command 15 can be removed from the command queue, and the execution process of the next command 15 can be started. If the data processing node 26 does not receive a feedback from the data acquisition node 24, for example because the data acquisition node 24 has failed, then, in a command sending step 300 it sends the command 15 to another data acquisition node 24.

Fig. 11 shows, in the system shown in Fig. 8, preferred steps of the method according to the invention, wherein a command 15 to be executed is sent by a view node 28 configured as a sink node 14 to a data acquisition node 24 configured as a source node 12.

In this case, in a modification request step 306, the sending of the command 15 is preferably initiated by a user, the command 15 preferably comprising a request related to the tag data of a tag, more preferably comprising a tag data write request. By way of example, sending the command 15 can be necessitated by the modification of a parameter during operation, control commands required for manual intervention, manual data input, or an operator confirmation required for continuing a process, for example the acknowledgement of operating conditions, the state of manually controlled valves, the position of manually mountable tanks, or by confirming that a moving machine has a clear path. The view node 28 enters the command 15 in the command queue containing the commands 15 to be executed.

When the command 15 is the next in the queue, in a command sending step 300 the view node 28 sends the command 15 to one of the redundantly operating data acquisition nodes 24 for execution, which executes the command 15 on the PLC 22 in an execution step 302, for example by writing a specific value in a tag. After the execution of the command 15 is completed, in a feedback step 304 the data acquisition node 24 sends feedback on the result of execution to the view node 28 that had sent the command 15, that the executed command 15 can be removed from the command queue, and the execution process of the next command 15 can be started. If the view node 28 does not receive a feedback from the data acquisition node 24, for example because the data acquisition node 24 has failed, then, in a command sending step 300 it sends the command 15 to another data acquisition node 24.

The user is not notified of the result of the execution of the command 15 even in the case of a successful execution, because the value of the given tag can be modified by a subsequent command 15 to be executed (as requested for example by a data processing node 26 depicted in Fig. 10) already before the user could be notified. The process of notifying the user of the current state of the given tag preferably involves that, after the command 15 is executed, the data acquisition node 24 reads out the current value from the PLCs 22, and - acting as a source node 12 - transfers this value to the sink nodes 14 corresponding to the given tag data.

## Claims

1. A method for communicating between operative nodes (10) constituting a network of a network-distributed process control system comprising a Programmable Logic Controller, PLC (22), each operative node (10) being configured by a node configuration comprising at least one network role, the method comprising reading out tag data of the PLC (22) by an operative node (10),
**characterised by** making available the tag data to other operative nodes (10) of the system by
- applying in the system tags that each have at least one assigned operative node (10) configured as a source node (12) and at least one assigned operative node (10) configured as a sink node (14), and
- establishing a bidirectional communication connection between the nodes of each node pair that is assigned to the same tag and consists of a source node (12) and a sink node (14), the bidirectional communication comprising
- transferring the tag data from the source node (12) to the sink node (14), and
- sending a command (15) to be executed from the sink node (14) to the source node (12), the command (15) relating to the tag data of the assigned tag or to a scheduling of a data transfer, wherein the command (15) comprises a tag data write request and/or a message for controlling the scheduling of transferring the tag data.

2. The method according to claim 1, **characterised by** applying, as one of the operative nodes (10) of the network, a configuration node (16) adapted for assigning node configurations to the other operative nodes, whereby the network roles of the source nodes (12) and of the sink nodes (14) are also assigned as parts of the node configurations.

3. The method according to claims 1 or 2, **characterised by** transferring, from the source node (12) to the sink node (14), the tag data at a resend time characteristic of the tag, and when the tag data are changed.

4. The method according to any one of claims 1-3, **characterised in that** the tag data write request comprises a name of the tag and a value to be written to the tag.

5. The method according to any one of claims 1-4, **characterised by**, in case at least two source nodes (12) are assigned to a tag, operating all of the source nodes (12) such that they transfer identical tag data, and transferring the tag data from all source nodes (12) corresponding thereto to the sink node(s) (14), and sending, from the sink node(s) (14) the command (15) to be executed adapted to control the scheduling of data transfer to at least one of the source nodes (12), whereby the transfer of the tag data of the source node (12) is rescheduled such that the source nodes (12) transfer the same tag data at different time instants.

6. The method according to claim 5, **characterised by** ordering in a queue the commands (15) to be executed sent from the sink node (14) to the source node (12), executing the command (15) to be executed coming first in the queue at one of the source nodes (12), and, while said execution is underway, not executing any command (15) to be executed at any other source node (12), then removing the executed command (15) from the queue after execution, and subsequently executing, one after the other, the subsequent commands (15) to be executed contained in the queue, and putting new commands (15) to be executed received meanwhile at the end of the queue.

7. A network-distributed process control system comprising
- operative nodes (10) constituting a network and being configured for performing network role(s),
- network layers corresponding to network roles, each network layer comprising one or more operative nodes (10) performing a network role corresponding to the given network layer,
**characterised in that**
- the network layers are expandable by an addition of further operative nodes (10),
- the network layers are capable of operating in a computing cloud (20) and on a local computing device, and
- the operative nodes (10) located in different network layers of the system are in a communication connection carrying out the method according to claim 1.

8. The system according to claim 7, **characterised in that** one of the operative nodes (10) of the system is a configuration node (16) adapted for storing and assigning node configurations of the rest of the operative nodes (10), including the network roles for source nodes (12) and sink nodes (14).

9. The system according to claim 8, **characterised in that** the configuration node (16) is further configured for performing a user-identification network role.

10. The system according to any one of claims 7-9, **characterised in that** the system comprises as network layers a data acquisition layer comprising data acquisition nodes 24 configured for a data acquisition network role, a data processing layer comprising data processing nodes 26 configured for processing acquired data, a presentation layer comprising a view node 28 configured for displaying data of the system and/or an archiving layer comprising archiving nodes 36 that are adapted for storing system data, or for archiving or saving the data to an external storage.

11. The system according to claim 10, **characterised in that** the data acquisition network layer comprises at least two operative nodes (10) that are data acquisition nodes (24) configured for performing data acquisition tasks, wherein the two data acquisition nodes (24) are implemented as data acquisition nodes (24) operating according to an identical node configuration, in master mode.

12. The system according to claim 10 or 11, **characterised in that** the data acquisition network layer is implemented on local computing devices.

13. The system according to any one of claims 10-12, **characterised in that** the data processing layer and the archiving layer are implemented, identically, in a computing cloud and/or on a local computing device, preferably the data processing layer and the archiving layer are implemented such that they are shared between a computing cloud and a local computing device.

14. The system according to any one of claims 8-13, **characterised in that** the configuration nodes (16) are connected to a computing cloud and/or server computer and/or computer cluster by means of a connection that is adapted for receiving and storing network configuration and for user identification.

## Patentansprüche

1. Verfahren zur Kommunikation zwischen operativen Knoten (10), die ein Netzwerk eines netzwerkverteilten Prozesssteuerungssystems bilden, das eine speicherprogrammierbare Steuerung, PLC (22), umfasst, wobei jeder operative Knoten (10) durch eine Knotenkonfiguration konfiguriert ist, die mindestens eine Netzwerkrolle umfasst, wobei das Verfahren das Auslesen von Tag-Daten der PLC (22) durch einen operativen Knoten (10) umfasst,
**gekennzeichnet durch** die Bereitstellung der Tag-Daten für andere operative Knoten (10) des Systems durch
- Anbringen von Tags in dem System mit jeweils mindestens einem zugewiesenen operativen Knoten (10), der als Source-Knoten (12) konfiguriert ist, und mindestens einem zugewiesenen operativen Knoten (10), der als Sink-Knoten (14) konfiguriert ist, und
- Aufbau einer bidirektionalen Kommunikationsverbindung zwischen den Knoten jedes Knotenpaares, das demselben Tag zugewiesen ist und aus einem Source-Knoten (12) und einem Sink-Knoten (14) besteht, wobei die bidirektionale Kommunikation Folgendes umfasst:
- Übertragen der Tag-Daten von dem Source-Knoten (12) zu dem Sink-Knoten (14), und
- Senden eines von dem Sink-Knoten (14) auszuführenden Befehls (15) an den Source-Knoten (12), wobei sich der Befehl (15) auf die Tag-Daten des zugewiesenen Tags oder auf eine Zeitplanung einer Datenübertragung bezieht, wobei der Befehl (15) eine Tag-Daten-Schreibanforderung und/oder eine Nachricht zur Steuerung der Zeitplanung der Übertragung der Tag-Daten umfasst.

2. Verfahren nach Anspruch 1, **dadurch gekennzeichnet, dass** als einer der operativen Knoten (10) des Netzwerks ein Konfigurationsknoten (16) angewandt wird, der geeignet ist, den anderen operativen Knoten Knotenkonfigurationen zuzuweisen, wodurch die Netzwerkrollen der Source-Knoten (12) und der Sink-Knoten (14) ebenfalls als Teile der Knotenkonfigurationen zugewiesen werden.

3. Verfahren nach Anspruch 1 oder 2, **dadurch gekennzeichnet, dass** die Tag-Daten von dem Source-Knoten (12) an den Sink-Knoten (14) zu einem für das Tag charakteristischen Zeitpunkt des erneuten Sendens übertragen werden, und wenn sich die Tag-Daten ändern.

4. Verfahren nach einem der Ansprüche 1 bis 3, **dadurch gekennzeichnet, dass** die Anforderung zum Schreiben von Tag-Daten einen Namen des Tags und einen in das Tag zu schreibenden Wert umfasst.

5. Verfahren nach einem der Ansprüche 1 bis 4, **dadurch gekennzeichnet, dass** in dem Fall, dass mindestens zwei Source-Knoten (12) einem Tag zugewiesen sind, alle Source-Knoten (12) so betrieben werden, dass sie identische Tag-Daten übertragen, und die Tag-Daten von allen Source-Knoten (12), die diesen entsprechen, an den/die Sink-Knoten (14) übertragen werden, und dass von dem (den) Sink-Knoten (14) der auszuführende Befehl (15), der geeignet ist, die Zeitplanung der Datenübertragung zu mindestens einem der Source-Knoten (12) zu steuern, gesendet wird, wodurch die Übertragung der Tag-Daten des Source-Knotens (12) neu geplant wird, sodass die Source-Knoten (12) dieselben Tag-Daten zu unterschiedlichen Zeitpunkten übertragen.

6. Verfahren nach Anspruch 5, **dadurch gekennzeichnet, dass** die auszuführenden Befehle (15), die von dem Sink-Knoten (14) an den Source-Knoten (12) gesendet werden, in einer Warteschlange geordnet werden, der auszuführende Befehl (15), der als erster in der Warteschlange kommt, an einem der Source-Knoten (12) ausgeführt wird, und, während die Ausführung im Gange ist, kein auszuführender Befehl (15) an einem anderen Source-Knoten (12) ausgeführt wird, dann der ausgeführte Befehl (15) nach Ausführung aus der Warteschlange entfernt wird, und anschließend nacheinander die nachfolgenden auszuführenden Befehle (15), die in der Warteschlange enthalten sind, ausgeführt werden und neue auszuführende Befehle (15), die in der Zwischenzeit empfangen wurden, an das Ende der Warteschlange gesetzt werden.

7. Netzwerkverteiltes Prozesssteuerungssystem, das Folgendes umfasst:
- operative Knoten (10), die ein Netzwerk bilden und so konfiguriert sind, dass sie eine oder mehrere Netzwerkrollen ausführen,
- Netzwerkschichten, die den Netzwerkrollen entsprechen, wobei jede Netzwerkschicht einen oder mehrere operative Knoten (10) umfasst, die eine der gegebenen Netzwerkschicht entsprechende Netzwerkrolle ausführen, **dadurch gekennzeichnet, dass**
- die Netzwerkschichten durch Hinzufügen weiterer operativer Knoten (10) erweiterbar sind,
- die Netzwerkschichten in einer Computing Cloud (20) und auf einer lokalen Rechenvorrichtung arbeiten können, und
- die operativen Knoten (10), die sich in verschiedenen Netzwerkschichten des Systems befinden, in einer Kommunikationsverbindung stehen, die das Verfahren nach Anspruch 1 durchführt.

8. System nach Anspruch 7, **dadurch gekennzeichnet, dass** einer der operativen Knoten (10) des Systems ein Konfigurationsknoten (16) ist, der zum Speichern und Zuweisen von Knotenkonfigurationen der übrigen operativen Knoten (10), einschließlich der Netzwerkrollen für Source-Knoten (12) und Sink-Knoten (14), geeignet ist.

9. System nach Anspruch 8, **dadurch gekennzeichnet, dass** der Konfigurationsknoten (16) ferner so konfiguriert ist, dass er eine Netzwerkrolle der Benutzeridentifizierung ausführt.

10. System nach einem der Ansprüche 7 bis 9, **dadurch gekennzeichnet, dass** das System als Netzwerkschichten eine Datenerfassungsschicht mit Datenerfassungsknoten (24), die für eine Netzwerkrolle der Datenerfassung konfiguriert sind, eine Datenverarbeitungsschicht mit Datenverarbeitungsknoten (26), die für die Verarbeitung erfasster Daten konfiguriert sind, eine Präsentationsschicht mit einem Ansichtsknoten (28), der für die Anzeige von Daten des Systems konfiguriert ist, und/oder eine Archivierungsschicht mit Archivierungsknoten (36), die für die Speicherung von Systemdaten oder für die Archivierung oder Speicherung der Daten in einem externen Speicher geeignet sind, umfasst.

11. System nach Anspruch 10, **dadurch gekennzeichnet, dass** die Datenerfassungs-Netzwerkschicht mindestens zwei operative Knoten (10) umfasst, bei denen es sich um Datenerfassungsknoten (24) handelt, die zur Durchführung von Datenerfassungsaufgaben konfiguriert sind, wobei die beiden Datenerfassungsknoten (24) als Datenerfassungsknoten (24) implementiert sind, die im Master-Modus in einer identischen Knotenkonfiguration arbeiten.

12. System nach Anspruch 10 oder 11, **dadurch gekennzeichnet, dass** die Datenerfassungs-Netzwerkschicht auf lokalen Rechenvorrichtungen implementiert ist.

13. System nach einem der Ansprüche 10 bis 12, **dadurch gekennzeichnet, dass** die Datenverarbeitungsschicht und die Archivierungsschicht identisch in einer Computing Cloud und/oder auf einer lokalen Rechenvorrichtung implementiert sind, vorzugsweise sind die Datenverarbeitungsschicht und die Archivierungsschicht so implementiert, dass sie von einer Computing Cloud und einer lokalen Rechenvorrichtung gemeinsam genutzt werden.

14. System nach einem der Ansprüche 8 bis 13, **dadurch gekennzeichnet, dass** die Konfigurationsknoten (16) mit einer Computing Cloud und/oder einem Servercomputer und/oder Computercluster über eine Verbindung verbunden sind, die für den Empfang und die Speicherung der Netzwerkkonfiguration und für die Benutzeridentifizierung geeignet ist.

## Revendications

1. Procédé pour communiquer entre noeuds opérationnels (10) constituant un réseau d'un système de contrôle de processus distribué par réseau comprenant un contrôleur logique programmable PLC (22), chaque noeud opérationnel (10) étant configuré par une configuration de noeud comprenant au moins un rôle de réseau, le procédé comprenant de lire des données d'étiquette du PLC (22) par un noeud opérationnel (10), **caractérisé par** mettre à disposition les données d'étiquette à d'autres noeuds opérationnels (10) du système en
- appliquant dans le système des étiquettes qui ont chacune au moins un noeud opérationnel (10) attribué configuré comme un noeud source (12) et au moins un noeud opérationnel (10) attribué configuré comme un noeud collecteur (14), et en
- établissant une liaison de communication bidirectionnelle entre les noeuds de chaque paire de noeuds qui est attribuée à la même étiquette et consiste en un noeud source (12) et un noeud collecteur (14), la communication bidirectionnelle comprenant
- de transférer les données d'étiquette du noeud source (12) au noeud collecteur (14), et
- d'envoyer une instruction (15) à exécuter, du noeud collecteur (14) au noeud source (12), l'instruction (15) concernant les données d'étiquette de l'étiquette attribuée ou une planification d'un transfert de données, dans lequel l'instruction (15) comprend une demande d'écriture de données d'étiquette et/ou un message pour contrôler la planification du transfert des données d'étiquette.

2. Procédé selon la revendication 1, **caractérisé par** appliquer, comme l'un des noeuds opérationnels (10) du réseau, un noeud de configuration (16) adapté pour attribuer des configurations de noeud aux autres noeuds opérationnels, moyennant quoi les rôles de réseau des noeuds sources (12) et des noeuds collecteurs (14) sont également attribués comme parties des configurations de noeuds.

3. Procédé selon les revendications 1 ou 2, **caractérisé par** transférer, du noeud source (12) au noeud collecteur (14), des données d'étiquette à un moment de renvoi caractéristique de l'étiquette, et quand les données d'étiquette sont changées.

4. Procédé selon l'une quelconque des revendications 1-3, **caractérisé en ce que** la demande d'écriture de données d'étiquette comprend un nom de l'étiquette et une valeur à écrire sur l'étiquette.

5. Procédé selon l'une quelconque des revendications 1-4, **caractérisé,** au cas où au moins deux noeuds sources (12) sont attribués à une étiquette, faire fonctionner tous les noeuds sources (12) de telle sorte qu'ils transfèrent des données d'étiquette identiques, et transférer les données d'étiquette de tous les noeuds sources (12) correspondant à celles-ci au(x) noeud(s) collecteur(s) (14), et envoyer, du/des noeud(s) collecteur(s) (14), l'instruction (15) à exécuter adaptée pour contrôler la planification d'un transfert de données à l'un au moins des noeuds sources (12), moyennant quoi le transfert des données d'étiquette du noeud source (12) est replanifié de telle sorte que les noeuds sources (12) transfèrent les mêmes données d'étiquette à différents instants.

6. Procédé selon la revendication 5, **caractérisé par** classer en une file d'attente les instructions (15) à exécuter envoyées du noeud collecteur (14) au noeud source (12), exécuter l'instruction (15) à exécuter arrivant en premier dans la file d'attente à l'un des noeuds sources (12) et, alors que ladite exécution est en cours, ne pas exécuter d'instruction (15) à exécuter à tout autre noeud source (12), puis supprimer l'instruction (15) exécutée de la file d'attente après exécution, et ensuite exécuter, l'une après l'autre, les instructions (15) suivantes à exécuter contenues dans la file d'attente, et mettre à la fin de la file d'attente de nouvelles instructions (15) à exécuter reçues entre-temps.

7. Système de contrôle de processus distribué par réseau comprenant
- des noeuds opérationnels (10) constituant un réseau et configurés pour réaliser, un/des rôle(s) de réseau,
- des couches réseau correspondant à des rôles de réseau, chaque couche réseau comprenant un ou plusieurs noeuds opérationnels (10) réalisant un rôle de réseau correspondant à la couche réseau donnée,
**caractérisé en ce que**
- les couches réseau sont extensibles par addition d'autres noeuds opérationnels (10),
- les couches réseau sont capables de fonctionner dans un nuage informatique (20) et sur un dispositif informatique local, et
- les noeuds opérationnels (10) situés dans des couches réseau différentes du système sont dans une liaison de communication exécutant le procédé selon la revendication 1.

8. Système selon la revendication 7, **caractérisé en ce que** l'un des noeuds opérationnels (10) du système est un noeud de configuration (16) adapté pour stocker et attribuer des configurations de noeud du reste des noeuds opérationnels (10), incluant les rôles de réseau pour des noeuds sources (12) et des noeuds collecteurs (14).

9. Système selon la revendication 8, **caractérisé en ce que** le noeud de configuration (16) est en outre configuré pour réaliser un rôle de réseau d'identification d'utilisateur.

10. Système selon l'une quelconque des revendications 7-9, **caractérisé en ce que** le système comprend comme couches réseau une couche d'acquisition de données comprenant des noeuds d'acquisition de données 24 configurés pour un rôle de réseau d'acquisition de données, une couche de traitement de données comprenant des noeuds de traitement de données 26 configurés pour traiter des données acquises, une couche de présentation comprenant un noeud de visualisation 28 configuré pour afficher des données du système et/ou une couche d'archivage comprenant des noeuds d'archivage 36 qui sont adaptés pour stocker des données de système, ou pour archiver ou sauvegarder les données dans un stockage externe.

11. Système selon la revendication 10, **caractérisé en ce que** la couche réseau d'acquisition de données comprend au moins deux noeuds opérationnels (10) qui sont des noeuds d'acquisition de données (24) configurés pour effectuer des tâches d'acquisition de données, dans lequel les deux noeuds d'acquisition de données (24) sont mis en oeuvre comme noeuds d'acquisition de données (24) fonctionnant selon une configuration de noeud identique, en mode maître.

12. Système selon la revendication 10 ou 11, **caractérisé en ce que** la couche réseau d'acquisition de données est mise en oeuvre sur des dispositifs informatiques locaux.

13. Système selon l'une quelconque des revendications 10-12, **caractérisé en ce que** la couche de traitement de données et la couche d'archivage sont mises en oeuvre, de manière identique, dans un nuage informatique et/ou sur un dispositif informatique local, de préférence la couche de traitement de données et la couche d'archivage sont mises en oeuvre de telle sorte qu'elle soient partagées entre un nuage informatique et un dispositif informatique local.

14. Système selon l'une quelconque des revendications 8-13, **caractérisé en ce que** les noeuds de configuration (16) sont reliés à un nuage informatique et/ou un ordinateur serveur et/ou une grappe d'ordinateurs à l'aide d'une liaison qui est adaptée pour recevoir et stocker une configuration de réseau et pour une identification d'utilisateur.
